# EUROPEAN PATENT APPLICATION

(11) **EP 3 974 330 A1**
(43) Date of publication of application: **30.03.2022**
(21) Application number: 21199861.2
(22) Date of filing: 29.09.2021
(51) Int. Cl.: B65B 35/38, B65B 35/58, B65G 47/08, B65G 47/252, B65G 47/84

(54) **MANUFACTURING MACHINE TO MANUFACTURE CAPSULES FOR INFUSION PRODUCTS AND RELATIVE CAPSULE OVERTURNING METHOD**

(30) Priority: 29.09.2020 IT 202000022969
(71) Applicant: Grandi S.r.l., 49138 Bologna (IT)
(72) Inventor: GRANDI, Alberto, 40138 BOLOGNA (IT)
(74) Representative: Musconi, Roberta

(57) **Abstract**

A manufacturing machine (1) to manufacture capsules (100) for infusion products and comprising: two feeding units (2, 4), which feed two first rows (3) and a second row (5), respectively, all having a same first vertical orientation. There are an input station (S1), which is arranged at the end of the second feeding unit (4), and output station (S2), which is arranged along the first feeding unit (2). There is an overturning drum (13), which is mounted so as to rotate around a horizontal rotation axis (X1), is provided with holding heads (14) designed to hold the capsules (100) and is suited to circumferentially move each holding head (14) between the input station (S1), where it receives a capsule (100) with the first vertical orientation, and the output station (S2), where it releases the capsule (100) with a second vertical orientation, contrary to the first vertical orientation. The holding heads (14) are mounted so as to be radially movable on the overturning drum (13) and are operated by an actuator system (15).

## Description

### CROSS-REFERENCE TO RELATED APPLICATIONS

This patent application claims priority from Italian patent application no. 102020000022969 filed on 29/09/2020.

### TECHNICAL FIELD

The invention relates to a manufacturing machine to manufacture capsules for infusion products and to a relative capsule overturning method.

In particular, the invention finds advantageous application in capsules for infusion products, which typically house on the inside, though without because of this loosing in generality, an infusion product in the form of powder, granules, solid pieces or leaves.

The infusion product typically comprises (non-exhaustive list) coffee, barley, powder milk and tea.

### PRIOR ART

The preparation of beverages obtained from the infusion of a product housed inside a capsule and extracted in a percolation machine has recently become more and more common among consumers. Capsules notoriously are containers comprising a cup-shaped body substantially having the shape of a truncated cone, which houses, on the inside, the infusion material and is closed at the top by a covering element (for example, a film connected to the cup-shaped body) .

Said capsules are notoriously sold inside a package, such as for example a case.

Said cases comprise a plurality of capsules, which are orderly arranged in at least one row, preferably several rows.

Advantageously, in order to maximize the filling of the volume of the case, capsules are arranged in two outer rows, which are parallel to one another and each comprise, for example, four capsules, and in a further central row, which overlaps them and comprises, for example, two or three overturned capsules (namely, with a vertical orientation that is contrary to one of the capsules of the outer rows).

Currently known manufacturing machines comprise a feeding unit, which is provided, for example, with a conveyor belt and feeds at least two parallel rows of capsules, and an overturning unit, which comprises a chute or an overturning drum to reverse the vertical orientation of the capsule and to place the overturned capsules beside the row of non-overturned capsules.

Overturning units of the first type, namely the ones provided with the chute, suffer from the drawback of causing the capsules, which slide inside chute due to the bending thereof, to be released at a tangential speed that is too high. Therefore, capsules tend to tilt as soon as they come into contact with non-overturned capsules lying under them.

In overturning units of the second type, namely the ones provided with an overturning drum, in order to improve the positioning of the overturned capsules between the capsules lying under them, openings are made in the outer surface of the drum so that sucked air can flow through them in order to hold and release the capsules. In particular, by activating said sucked air, the overturning drum holds the capsules on its surface; whereas, by deactivating the said sucked air, the overturning drum releases the capsules. However, manufacturing machines of this type are affected by some drawbacks. First of all, since the release of the capsules is controlled by the mere interruption of the supply of sucked air, the capsules are released in a random position, falling because of gravity.

According to a possible alternative, which is described for example by document DE102017104098, instead of holding the capsules with the aid of sucked air, the overturning drum is provided with a covering element, which is circumferentially arranged around it so as to close the seats housing the capsules at the top. Hence, the covering element prevents the capsules from radially coming out of the respective seat. However, this solution does not evidently allow the respective capsule to be firmly held in its correct position. Indeed, the covering element, which is integral to the overturning drum, allows anyway the capsule to make unintentional movements (namely, movements that allow the capsule to "shake") in the space defined between the respective seat obtained in the overturning element and the covering element, with a consequent imprecise (namely, inaccurate) positioning of the overturned capsule between the non-overturned capsules lying under it.

Furthermore, if the (non-overturned) capsules underneath are not perfectly positioned, but there is even the smallest eccentricity, the overturned capsules, which normally are in contact with the capsules lying under them, tend to tilt and are not perfectly positioned. In addition, in order to ensure an acceptable positioning of the capsules, the overturning drum needs to be operated at a low rotation speed, so as to prevent the capsules from being deflected because of the centrifugal force acting upon them.

On the other hand, document WO2013144837 discloses a manufacturing machine provided with at least one overturning drum comprising movable holding heads, which are movable by means of an actuator system comprising lever mechanisms (in particular, a pentalateral), which are configured to allow each holding head to have two degrees of freedom relative to the overturning drum, so as to allow each holding head to move in a plane orthogonal to the rotation axis of the overturning drum itself, between a pick-up station (arranged in the area of a horizontal feeding conveyor) and a release station (arranged in the area of a support table arranged orthogonally relative to the feeding conveyor).

The overturning drum described in WO2013144837 is configured to intercept the entire flow of capsules produced by the manufacturing machine and to rotate them by 90° or 270°, respectively. Therefore, in WO2013144837, all capsules produced by the machine have to be rotated by 90° or 270° by the overturning drum. As a result, in document WO2013144837, the capsules upstream of said at least one overturning drum and downstream of said at least one overturning drum are subjected to a rotation from a vertical axis orientation (in the area of the feeding conveyor) to a horizontal axis orientation (in the area of the support table) . Hence, the overturning drum does not receive the capsules with a vertical orientation in the area of the input station and does not release them with a vertical orientation (contrary to the one of the input station) between two rows of capsules fed by the feeding unit in the area of the output station.

Furthermore, according to document WO2013144837, in the area of the output station, the capsules can be arranged on the support table in one single row or in two rows with a contrary and alternated orientation relative to one another. In order to obtain the arrangement of the capsules rotated by 90° on the support table in two rows with alternated orientation, document WO2013144837 teaches that two overturning drums are needed, each intercepting half the flow of capsules produced by the machine. Specifically, an overturning drum is configured to rotate the respective capsule by 90°, whereas the other overturning drum is configured to rotate the respective capsule by 270°. As a result, the capsules rotated by 90° fed by the respective overturning drum have an orientation that is contrary to the one of the capsules rotated by 270° fed by the other overturning drum.

To sum up, the manufacturing machine described in WO2013144837 has an overturning drum, which is mainly configured to rotate the longitudinal axis of the capsules by 90° between the input station and the output station. Furthermore, in case the capsules have to be arranged in two rows with a reverse and alternated orientation relative to one another in the area of the output station (in any case, keeping the axis of the capsules horizontal), two overturning drums have to be arranged adjacent to one another and carry out a 90° and 270° rotation of the respective capsules before placing them on the support table.

The actuator system comprising the lever mechanisms disclosed in WO2013144837 suffers from the drawback that, since each holding head has two degrees of freedom (relative to the overturning drum) in a plane that is orthogonal to the rotation axis of the overturning drum itself, the control and the operation of the movements of the single lever mechanisms, as well as the positioning of the rotated capsule, can be difficult.

Furthermore, the actuator system provided with lever mechanisms requires a large number of components, which cause the actuator system to become complex and large-sized.

Therefore, currently known manufacturing machines are not capable of ensuring a correct ad accurate positioning of the overturned capsules between the non-overturned capsules lying under them, hence leading to a high degree of waste.

### DESCRIPTION OF THE INVENTION

Therefore, the object of the invention is to provide a manufacturing machine to manufacture capsules for infusion products and a relative capsule overturning method, which are not affected by the drawbacks of the prior art and are easy and economic to be manufactured and implemented.

According to the invention, there is provided a manufacturing machine to manufacture capsules for infusion products as claimed in the appended claims.

According to the invention, there is provided a capsule overturning method as claimed in the appended claims.

### BRIEF DESCRIPTION OF THE DRAWINGS

The invention will be best understood upon perusal of the following description of embodiments provided by mere way of non-limiting example, wherein:
- figure 1 is a schematic perspective view of a capsule manufacturing machine with an overturning drum according to a first embodiment;
- figure 2 is a schematic view of an enlarged portion of figure 1;
- figure 3 is a schematic view of a portion of the manufacturing machine of figure 1 from a different angle;
- figure 4 is a cross-section view of a portion of the overturning drum along line IV-IV of figure 3;
- figure 5 is similar to figure 3 and shows a manufacturing machine with an overturning drum according to a second embodiment;
- figure 6 is a schematic view of a known capsule for infusion products; and
- figures 7a and 7b show two examples of known packages for capsules.

### PREFERRED EMBODIMENTS OF THE INVENTION

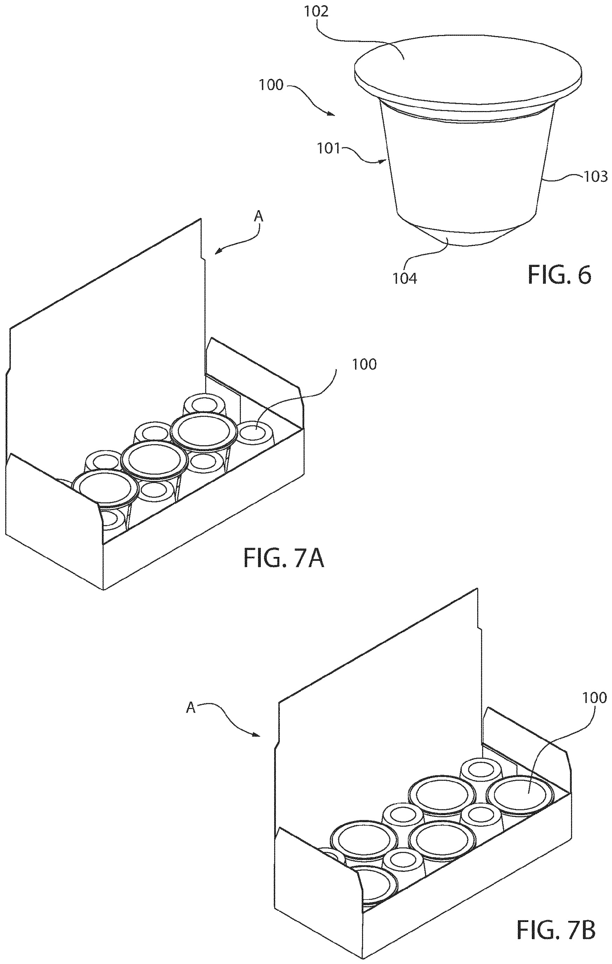

In the description below, explicit reference will be made to a generic capsule 100, which is not part of the invention. The capsule 100 notoriously is a product that has a cup-shaped boy 101 with the shape of truncated cone, which defines a cavity where the infusion product is housed and is closed, at the top, by a closing element 102, which preserves the organoleptic features of the infusion product and prevents the latter from coming out. The closing element 102 seals the cup-shaped body 101. In particular, the cup-shaped body 101 comprises a side wall 103 and a bottom wall 104. The capsules 100 are typically housed inside a package, namely a case A, which is shown by way of example in figures 6a and 6b.

The capsule 100 can have two vertical orientations. In particular, the capsule 100 can have a vertical orientation in which the closing element 102 is down and the bottom wall 104 is up. In other words, in this vertical orientation, the capsule 100 is *"upside down".* Alternatively, the capsule 100 can have a contrary vertical orientation in which the closing element 102 is up and the bottom wall 104 is down. In other words, in this vertical orientation, the capsule 100 is *"right side up".* Hence, the difference between the two vertical orientations lies in the fact that the capsules 100 with a vertical orientation are rotated (namely, overturned) by 180° relative to the capsules 100 with the other vertical orientation.

Hereinafter, the term "row" indicates an orderly succession of capsules 100 arranged behind one another.

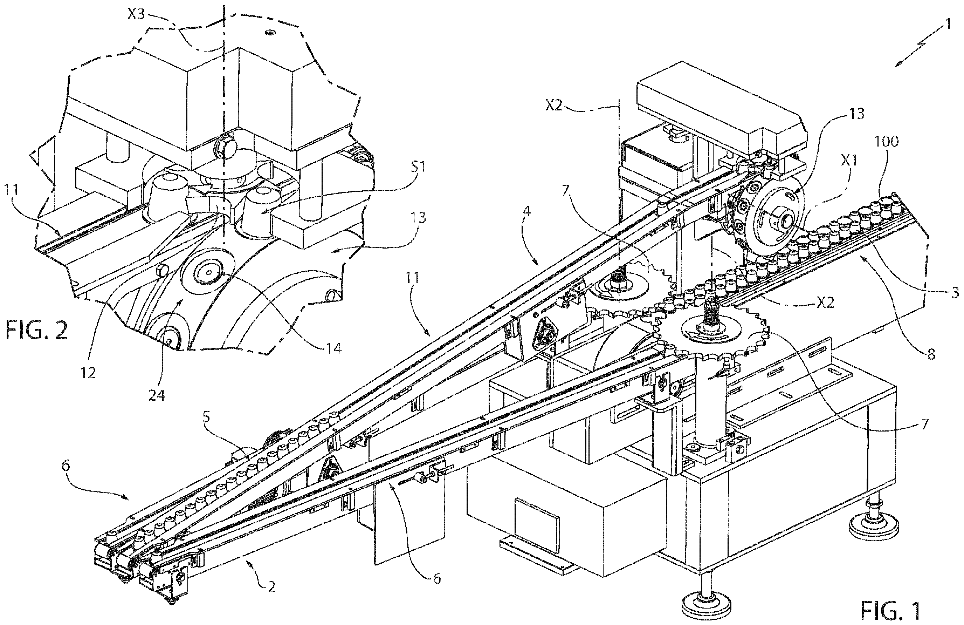

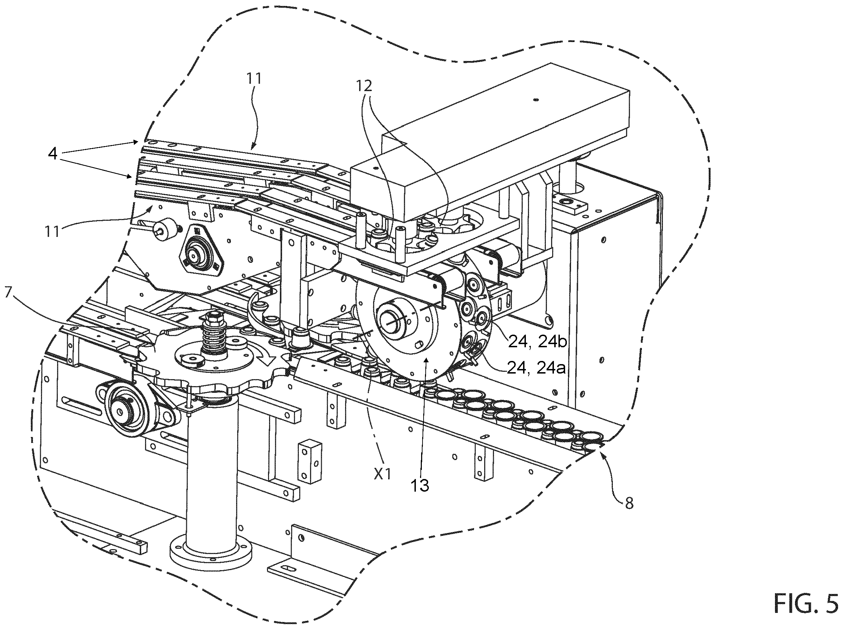

In figure 1, number 1 indicates, as a whole, a manufacturing machine to manufacture capsules 100 for infusion products (schematically shown in figure 6) according to the invention. Figures 1-4 show a manufacturing machine 1 creating a configuration of capsules 100 of the type shown, by way of example, in figure 6a (without because of this loosing in generality as it relates to the total number of capsules 100). In particular, in this configuration of capsules 100, there are two outer rows of capsules 100 parallel to one another with the closing element 102 facing downward and a central row of capsules 100 with a contrary vertical orientation, namely with the closing element 102 facing upward. On the other hand, figures 5 shows a variant of the manufacturing machine 1 creating a configuration of capsules 100 of the type shown, by way of example, in figure 6b (without because of this loosing in generality as it relates to the total number of capsules 100). In particular, in this configuration of capsules 100, there are two parallel rows of capsules 100 and, in each row, capsules 100 with a contrary vertical orientation are alternated with one another. In other words, capsules 100 with the same vertical orientations are arranged along imaginary "zigzag" lines intersecting one another. Therefore, in this configuration, the capsule 100 of a row has a contrary vertical orientation relative to the capsule 100 of the other row next to it.

The manufacturing machine 1 comprises a feeding unit 2, which feeds two parallel and adjacent rows 3 of capsules 100, all having the same vertical orientation (in the same row 3), and a feeding unit 4, which feeds another row 5 of capsules 100, all having the same vertical orientation (in the same row 5). In particular, the capsules 100 of the rows 3 and 5, namely fed by the feeding units 2 and 4, have the same vertical orientation.

The feeding unit 2 comprises two conveyor means 6, two separating drums 7 and a common conveyor means 8. In particular, each conveyor means 6 feeds a respective row 3 of capsules 100 to the respective separating drum 7, which places each capsule 100 on the common conveyor means 8. The two separating drums 7 are mounted so as to rotate around a respective vertical axis X2 and are provided with a plurality of pockets, which are properly spaced apart from one another so as to define the predetermined output pitch of the capsules 100 fed to the conveyor means 8. Each pocket is configured to house one single capsule 100.

The separating drums 7 are counter-rotating, which means that one of them has a rotation direction that is contrary to the rotation direction of the other one. Furthermore, the two separating drums 7 rotate in a synchronous manner and in phase with the common conveyor means 8, so as to cyclically release the pair of capsules 100 exactly in a predefined position on the conveyor means 8.

Preferably, the conveyor means 6 and 8 each comprise a conveyor belt. In particular, the conveyor means 8 can comprise a toothed belt.

The feeding unit 4, on the other hand, comprises a conveyor means 11 and a separating drum 12.

In particular, the conveyor means 11 feeds the row 5 of capsules 100 to the separating drum 12, which places each capsule 100 on an overturning drum 13 arranged downstream, as described in detail below. The separating drum 12 is mounted so as to rotate around a vertical axis X3 and feeds one single capsule 100 to the overturning drum 13 (in particular, to a holding head 14, which is arranged in the area of the input station S1 of the overturning drum 13). The separating drum 12 is provided with a plurality of pockets, which are properly spaced apart from one another so as to define a predetermined output pitch of the capsules 100 fed to the overturning drum 13. Each pocket is configured to house one single capsule 100.
Preferably, the conveyor means 11 comprises a conveyor belt.

According to figures 1, 3 and 5, the overturning drum 13 is interposed (in particular, in the vertical direction) between the two feeding units 2 and 4. Therefore, the feeding unit 4 is inclined relative to the feeding unit 2. The angle of inclination depends on the diameter of the overturning drum 13.

The manufacturing machine 1, in particular its overturning drum 13, has an input station S1, which is arranged at the end of the feeding unit 4, and output station S2, which is arranged along the feeding unit 2. In particular, the input station S1 is arranged in the area that joins the output of the separating drum 12 and the input of the overturning drum 13; whereas the output station S2 is arranged in the area that joins the common conveyor means 8 and the output of the overturning drum 13.

In particular, the output station S2 is arranged, in particular, at approximately 180° relative to the input station S1.

In other words, the input station S1 is arranged in a position that is diametrically opposite relative to the output station S2.

The overturning drum 13 is provided with a plurality of holding heads 14 designed to hold the capsules 100 and is mounted so as to rotate around a horizontal rotation axis X1 in order to circumferentially move each holding head 14 between the input station S1, where it receives the capsule 100 with a given vertical orientation (in particular, with the closing element 102 facing downward), and the output station S2, where it releases the capsule 100 with a vertical orientation (in particular, with the closing element 102 facing upward), which is contrary to the previous vertical orientation, between the capsules 100 of the two rows 3 (in particular, in a compartment defined by the capsules 100 fed by the conveyor means 8).

In particular, in the embodiment shown in figures 1-4, the overturning drum 13 has twelve holding heads 14.

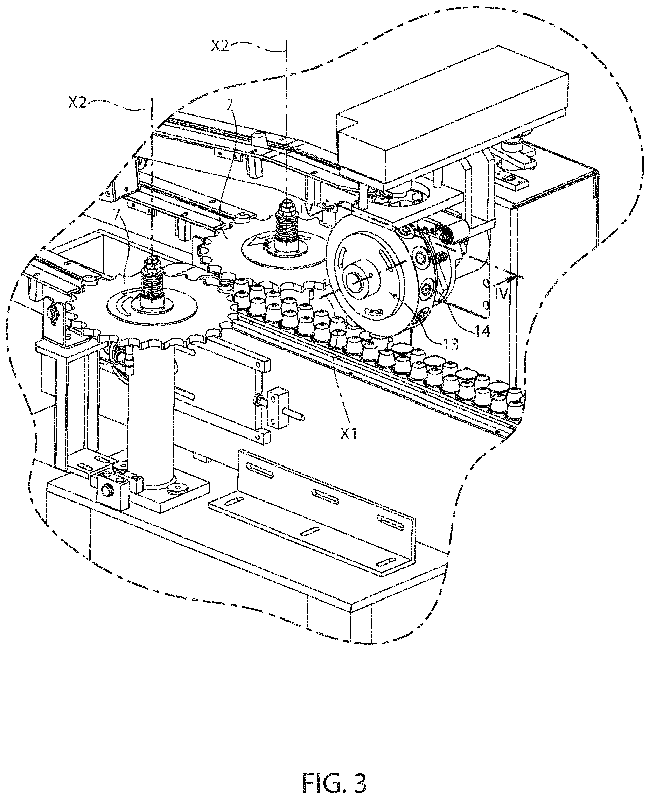

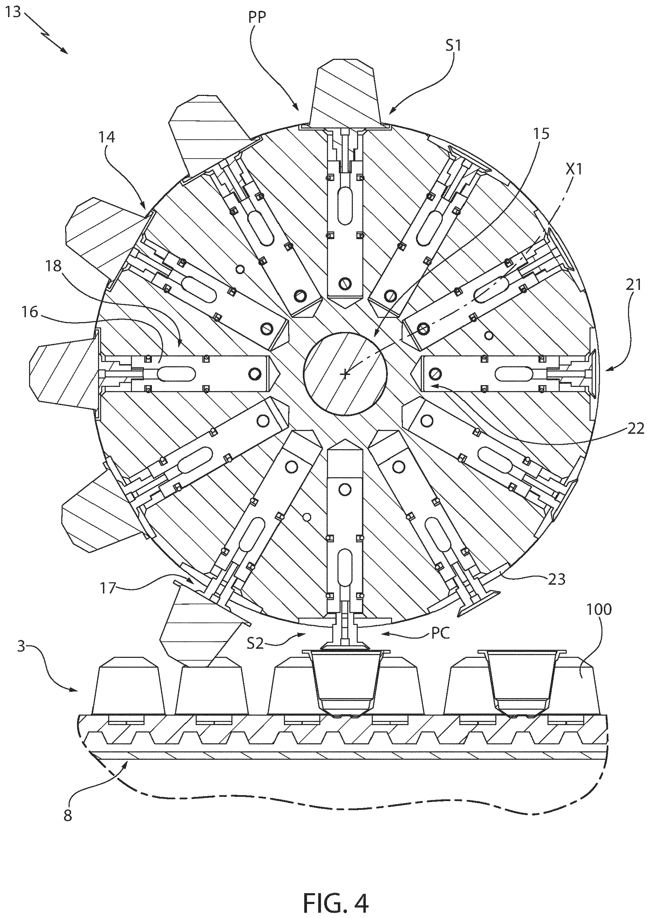

The holding heads 14 are mounted to as to be radially movable on the overturning drum 13. In other words, the holding heads 14 are configured to cyclically translate along a radial direction of the overturning drum 13 so as to move away from and close to the axis X1. In detail, according to figure 4, which is the cross section along line IV-IV of figure 3, an actuator system 15 is provided, which radially and cyclically moves each holding head 14 between a radial holding position PP in the area of the input station S1 and a radial release position PC, which is different from the radial holding position PP, in the area of the output station S2. In particular, in the radial holding position PP in the area of the input station S1, the holding head 14 receives the capsule 100 (which is schematically shown in figure 4 with a broken-line section) and holds it until it reaches the output station S2, where the holding head 14 is in the release position PC and releases the overturned capsule 100 (namely, with the contrary vertical orientation, as schematically shown in figure 4 with a solid-line section) in the compartment defined by the non-overturned capsules 100 fed by the feeding unit 2, which, hence, have a contrary vertical orientation.

Advantageously, each holding head 14 has one single degree of freedom relative to the overturning drum 13. In other words, each holding head 14 makes a translation (specifically, a pure translation in the radial direction) relative to the overturning drum 13.

After that, the capsules 100 are conveyed towards a packing unit (not shown), where they are inserted into a case A.

According to the cross section shown in figure 4, in the radial holding position PP, each holding head 14 is arranged closer to the rotation axis X1 compared to the radial release position PC. Therefore, in the radial release position PC, each holding head 14 has its maximum extension (namely, is the farthest from the axis X1). In the intermediate positions between the radial holding position PP and the radial release position PC, each holding head 14 makes the radial translation towards the outside (moving away from the axis X1); whereas, in the intermediate positions between the radial release position PC and the radial holding position PP, each holding head 14 makes the radial translation towards the inside (moving closer to the axis X1).

Advantageously, the single stroke of each holding head 14 ranges from 5 to 20 mm.

Preferably, each holding head 14 radially moves outwards along a path ranging from 90° to 180°, preferably from 150° to 180°, of rotation of the overturning drum 13 starting from the radial holding position PP. In other words, the holding heads start 14 radially translating outwards after the overturning drum 13 has made a rotation of at least 90°, in particular at least 150°, from the radial holding position PP.

Advantageously, as shown in figure 4, each holding head 14 is carried by a support arm 16, which is radially oriented, is connected to an inner end 17 of the holding head 14 and is arranged on the inside of a housing 18 obtained in the overturning drum 13. In particular, each support arm 16 has an outer end 21, which is integral to the corresponding holding head 14, and an inner end 22, which is mechanically connected to the actuator system 15.

Advantageously, each arm 16 has one single degree of freedom relative to the overturning drum 13. In other words, each arm 16 makes a translation (specifically, a pure translation in the radial direction) relative to the overturning drum 13.

Advantageously, the housing 18 has, in the area of its outer end part, a seat 23, which is configured to house the holding heads 14 when they are arranged in the radial holding position PP. In other words, the seats 23 house the holding heads 14 so that, when they are in the radial holding position PP, they do not project (or project to a limited extent) from the overturning drum 13.

According to the preferred embodiment, the holding heads 14 are sucking heads, such as for example suction cups. In other words, the holding heads 14 can hold and release the capsule 100 by deactivating and activating the supply of sucked air. In particular, with the aid of a pump generating a vacuum and a vacuum valve or solenoid valve, it is possible to control the instant of activation or deactivation of the vacuum supplied to the holding head 14.

According to a possible variant, the holding heads 14 can comprise any element configured to firmly hold the capsule 100.

Advantageously, the actuator system 15 comprises a cam (not shown), upon which coupling means, such as for example rollers, act, said coupling means being connected to the inner end 22 of the support arm 16 and controlling the inward and outward translation of each support arm 16.

According to a possible variant, the actuator system 15 could comprise an electronic cam.

According to the embodiment shown in figures 1-4, the overturning drum 13 is a so-called single drum, namely it has one single group 24 of holding heads 14. Therefore, as mentioned above, the overturning drum 13 of figures 1-4 creates the configuration of capsules 100 shown in figure 7A.

According to the embodiment shown in figure 5, the overturning drum 13 is a so-called double drum, namely it has two groups 24A and 24B of holding heads 14. In particular, the overturning drum 13 according to this embodiment comprises twenty-four holding heads 14.

Therefore, as mentioned above, the overturning drum 13 of figure 5 creates the configuration of capsules 100 shown in figure 7B. The components shared with embodiment of the manufacturing machine 1 of figure 1 maintain the same numbers and are considered as included in the description even if they are not mentioned again for the sake of brevity. The manufacturing machine 1 of figure 5 comprises two feeding units 4, each feeding a row 5 of capsules 100 to the overturning drum 13. In particular, the overturning drum 13 is interposed (in particular, in horizontal direction) between the two feeding units 4, in particular between the two counter-rotating separating drums 12 of the respective feeding unit 4. The two separating drums 12 rotate in a synchronous manner and in phase with the overturning drum 13, so as to cyclically release the pair of capsules 100 exactly in the area of the holding head 14 without misalignments or offsets.

The manufacturing machine 1 of figure 5 comprises two input stations S1 next to one another, which are arranged at the end of the respective feeding unit 4; and two output stations S2 next to one another, which are arranged along the feeding unit 2. Each input station S1 receives the capsules 100 from a respective separating drum 12. On the other hand, in the area of each output station S2, the overturned capsules 100 are placed in the compartments defined by the non-overturned capsules 100 fed by the common conveyor means 8.

The overturning drum 13 has two groups 24A and 24B of holding heads 14, each arranged on a respective circumference, which is parallel and next to the other circumference. In other words, each group 24A and 24B of holding heads 14 is arranged in a respective circumferential row and the two circumferential rows are parallel to one another. Each group 24A and 24B of holding heads 14 receives the capsules 100 from the respective feeding unit 4, in particular from the respective separating drum 12.

Advantageously, the holding heads 14 of the group 24A are staggered relative to and alternated with the holding heads 14 of the group 24B.

The invention also relates to an overturning method to overturn the capsules 100 by means of the overturning drum 13.

The overturning method comprises the step of feeding, by means of a feeding unit 2, at least two rows 3 of capsules 100, each having the same vertical orientation; and the step of feeding, with the feeding unit 4, at least one row 5 of capsules 100, each having the same vertical orientation.

The method further comprises the step of rotating the overturning drum 13, which is provided with the holding heads 14 designed to hold the capsules 100, around the horizontal rotation axis X1 in order to circumferentially move each holding head 14 between the input station S1 arranged at the end of the feeding unit 4, where it receives the capsule 100 with a vertical orientation, and the output station S2 arranged along the feeding unit 2, where it releases the capsule 100 with a different vertical orientation, which is contrary to the other vertical orientation, between the capsules 100 of the two rows 3 (in particular, in the compartment defined by the capsules 100 fed by the conveyor means 8). The method entails controlling the overturning drum 13 by means of the actuator system 15 so as to radially and cyclically move each holding head 14 between the radial holding position PP in the area of the input station S1 and the radial release position PC, which is different from the radial holding position PP, in the area of the output station S2.

In particular, the method comprises the sub-step of cyclically radially moving the holding heads 14 outwards between the radial holding position PP and the radial release position PC and of cyclically radially moving the holding heads 14 inwards between the radial release position PC and the radial holding position PP.

Advantageously, there is a further step of holding the capsule 100 by means of the holding head 14 until the radial release position PC is reached and releasing the capsule 100, which is provided with the contrary vertical orientation, between the capsules 100 provided with the other vertical orientation (in particular, the non-overturned one) by means of the holding head 14, namely in the compartment defined by the capsules 100 fed by the common conveyor means 8.

Finally, the method comprises a packing step to pack the capsules 100, which takes place in the area of the packing unit, where the capsules 100 are inserted into the suitable case A.

The manufacturing machine 1 and the relative overturning method described above have a plurality of advantages.

First of all, the invention allows for an accurate and correct positioning thanks to the holding heads 14, which hold the capsules 100 until each capsule 100 is released between the capsules lying underneath. In other words, the holding heads 14 guide the overturned capsule 100 until it is completely arranged in the correct position in the compartment defined by the non-overturned capsules 100, which are fed by the common conveyor means 8.

The overturning drum 13 provided with the radially movable holding heads 14 further has the advantage of allowing the manufacturing machine 1 to substantially remain the same in case of a change of format of the capsule 100. In other words, the radially movable holding heads 14 make up for possible height changes of the capsule 100, which typically occur in case of a format change. Therefore, upon change of format of the capsule 100, the only thing to be done is change the stroke of the support arms 16.

Furthermore, the radially movable holding heads 14 allow the sucked air to remain activated for a longer amount of time. In this case, indeed, the sucked air is deactivated only when the capsule 100 has already been placed in the compartment defined by the non-overturned capsules.

The manufacturing machine 1 can be operated at a greater speed, since the holding heads 14 prevent the capsules 100 from being deflected due to the centrifugal force acting upon them.

## Claims

1. A manufacturing machine (1) to manufacture capsules (100) for infusion products comprising:
a first feeding unit (2), which feeds two first parallel and adjacent rows (3) of capsules (100), all having a same first vertical orientation;
a second feeding unit (4), which feeds a second row (5) of capsules (100), all having the same first vertical orientation; and
an input station (S1), which is arranged at the end of the second feeding unit (4);
an output station (S2), which is arranged along the first feeding unit (2); and
an overturning drum (13), which is provided with holding heads (14) designed to hold the capsules (100) and is mounted so as to rotate around a first horizontal rotation axis (X1) in order to circumferentially move each holding head (14) between the input station (S1), where it receives a capsule (100) with the first vertical orientation, and the output station (S2), where it releases the capsule (100) with a second vertical orientation, contrary to the first vertical orientation, between the capsules (100) of the two first rows (3);
the manufacturing machine (1) is **characterized in that** the holding heads (14) are mounted in a radially movable manner on the overturning drum (13); and
an actuator system (15) is provided, which radially and cyclically moves each holding head (14) between a radial holding position (PP) in the area of the input station (S1) and a radial release position (PC), which is different from the radial holding position (PP), in the area of the output station (S2).

2. A manufacturing machine (1) according to claim 1, wherein the holding heads (14) are sucking heads.

3. A manufacturing machine (1) according to claim 1 or 2, wherein, in the radial holding position (PP), each holding head (14) is arranged closer to the first rotation axis (X1) compared to the radial release position (PC).

4. A manufacturing machine (1) according to any one of the claims from 1 to 3, wherein each holding head (14) radially moves outwards along a path ranging from 90° to 180°, preferably from 150° to 180°, of rotation of the overturning drum (13) starting from the radial holding position (PP).

5. A manufacturing machine (1) according to any one of the claims from 1 to 4, wherein each holding head (14) is carried by a support arm (16), which is radially oriented and is arranged at an inner end (17) of the holding head (14) .

6. A manufacturing machine (1) according to claim 5, wherein each support arm (16) has an outer end (21), which is integral to the corresponding holding head (14), and an inner end (22), which is mechanically connected to the actuator system (15).

7. A manufacturing machine (1) according to any one of the claims from 1 to 6 and comprising:
two second feeding units (4);
two input stations (S1) next to one another, which are arranged at the end of the respective second feeding unit (4); and
two output stations (S2) next to one another, which are arranged along the first feeding unit (2);
wherein the overturning drum (13) is interposed between the two second feeding units (4) and has two groups (24, 24A, 24B) of holding heads (14), each arranged on a respective circumference, which is parallel and is arranged next to the other circumference; each group (24, 24A, 24B) of holding heads (14) receives the capsules (100) from the respective second feeding unit (4).

8. A manufacturing machine (1) according to claim 7, wherein the holding heads (14) of a first group (24, 24A) are staggered and alternated relative to the holding heads (14) of the second group (24, 24B).

9. A manufacturing machine (1) according to any one of the preceding claims, wherein the second feeding unit (4) comprises a separating drum (12), which is mounted so as to rotate around a second vertical axis (X2) and feeds each single capsule (100) to the holding head (14) arranged in the area of the input station (S1) of the overturning drum (13) .

10. A manufacturing machine (1) according to any one of the preceding claims, wherein the overturning drum (13) comprises seats (23), in which the holding heads (14) are situated when they are arranged in the radial holding position (PP).

11. An overturning method to overturn infusion products with an overturning drum (13), in particular according to any one of the claims from 1 to 10; the method comprises the steps of:
feeding, by means of a first feeding unit (2), at least two first rows (3) of capsules (100), each having a first vertical orientation;
feeding, with a second feeding unit (4), at least a second row (5) of capsules (100), each having the first vertical orientation; and
rotating an overturning drum (13), which is provided with holding heads (14) designed to hold the capsules (100), around a first horizontal rotation axis (X1) in order to circumferentially move each holding head (14) between an input station (S1) arranged at the end of the second feeding unit (4), where it receives a capsule (100) with the first vertical orientation, and the output station (S2) arranged along the first feeding unit (2), where it releases the capsule (100) with a second vertical orientation, contrary to the first vertical orientation, between the capsules (100) of the two first rows (3);
the overturning method is **characterized by** the further step of controlling the overturning drum (13) by means of an actuator system (15), which radially and cyclically moves each holding head (14) between a radial holding position (PP) in the area of the input station (S1) and a radial release position (PC), which is different from the radial holding position (PP), in the area of the output station (S2) .

12. A method according to claim 11 and comprising the further steps of holding the capsule (100) by means of the holding head (14) until the radial release position (PC) and releasing the capsule (100) with the second vertical orientation between the capsules (100) with the first vertical orientation by means of the holding head (14) in the radial release position (PC).
